# EUROPEAN PATENT SPECIFICATION

(11) **EP 2 928 738 B1**
(45) Date of publication and mention of the grant of the patent: **02.10.2019**
(21) Application number: 13859992.3
(22) Date of filing: 03.12.2013
(51) Int. Cl.: B60T 8/1755, B60W 30/02, B60W 10/18

(54) **DEVICE AND METHOD FOR THE IMPROVEMENT OF SAFETY WHEN DRIVING A VEHICLE**
VORRICHTUNG UND VERFAHREN ZUR ERHÖHUNG DER SICHERHEIT BEIM FAHREN EINES FAHRZEUGS
DISPOSITIF ET PROCÉDÉ POUR L'AMÉLIORATION DE LA SÉCURITÉ LORS DE LA CONDUITE D'UN VÉHICULE

(30) Priority: 04.12.2012 SE 1251372; 02.12.2013 SE 1351426
(43) Date of publication of application: 14.10.2015
(73) Proprietor: Scania CV AB, 151 87 Södertälje (SE)
(72) Inventor: JONSSON, Håkan, S-126 77 Hägersten (SE); EDINGER, Martin, S-151 46 Södertälje (SE); ÖSTLUND, Tomas, S-141 37 Huddinge (SE)
(74) Representative: Scania CV AB
(86) International application number: PCT/SE2013/051431
(87) International publication number: WO 2014/088497

(56) References cited:
- WO-A1-2006/099662
- DE-A1-102009 001 508
- US-A- 5 510 989
- US-A1- 2004 254 703
- US-A1- 2006 276 944
- US-A1- 2007 213 898
- US-B1- 6 701 243
- 'Electronic Stability Program (ESP) for passenger cars' AUTOMOTIVE HANDBOOK July 2007, pages 852 - 861, XP008179606
- 'Automotive networking' AUTOMOTIVE HANDBOOK July 2007, pages 1092 - 1093, XP008179642

## Description

### TECHNICAL FIELD

The present invention pertains to a method for the improvement of safety when driving a vehicle. The invention also relates to a computer program product, comprising program code for a computer, to implement a method according to the invention. The invention also pertains to a device for the improvement of safety when driving a vehicle, and a vehicle which is equipped with such a device.

### BACKGROUND

In the context of increasing performance requirements in relation to newly manufactured motor vehicles, and as motor vehicles are used in ever tougher operating and ambient conditions, various stability systems have been developed and implemented, and it is extremely important for vehicle manufacturers to offer safer motor vehicles in order to minimise the risk of accidents or incidents while driving motor vehicles, such as for example heavy goods vehicles, not least having regard to the increasingly tough competition situation among different vehicle manufacturers. It should be pointed out that vehicles which are driven during temporarily or permanently unstable conditions e.g. on public roads, off-road, or at different plants may present a danger to both the vehicle operator, other road users and objects or buildings in the vehicle's vicinity. Accidents or incidents connected with operation of a vehicle during unstable conditions may entail serious consequences to both people and the environment, for example in the event of a collision or leakage of loaded goods.

Currently motor vehicles equipped with some form of stability system, supporting an operator of said motor vehicle, are available. These stability systems may be arranged to continuously establish, during the operation of the vehicle, a stability related parameter.

US 5510989 describes a system to affect a vehicle's dynamics when driving the vehicle. The system discloses a number of sensors adapted to detect a number of different variables, where sensors send signals comprising said variables to an evaluation unit. The evaluation unit processes the signals and forwards them to control devices for the vehicle dynamic motion.

US 20040254703 describes a system which from detected sensor signals establishes a stability indicator. The stability indicator provides a communication network to which various vehicle management systems are connected. The stability indicator is compared to a threshold, and when said stability indicator is equal to or exceeds said threshold, the use of said vehicle management system is restricted.

US2006265108 describes a stability system for a vehicle, where one parameter related to the risk of roll over is calculated. Further, an indicator variable is calculated, which is related to the roll over tendency, which indicator variable may be used to draw the attention of the vehicle driver to the presence of a roll over risk, for example with a lamp arranged in an instrument panel of the vehicle.

Also, US 6,701,243 describes a method and a device for controlling roll slip.

### SUMMARY OF THE INVENTION

One objective of this invention is to provide a novel and advantageous method for the improvement of safety when driving a vehicle.

Another objective of the invention is to provide a novel and advantageous device and a novel and advantageous computer program for the improvement of safety when driving a vehicle.

Yet another objective of the invention is to provide a method, a device and a computer program to achieve improved performance in a vehicle when driven.

Some of these objectives are achieved with a method for the improvement of safety when driving a vehicle according to patent claim 1. Other objectives are achieved with a device according to claim 11. Preferred embodiments are described in the dependent claims.

According to one aspect of the invention a method for the improvement of safety is provided, comprising the steps of:
- continuously establish a measure of instability with respect to the vehicle;
- continuously provide said measure of instability within a communications network internal to the vehicle to which network at least one vehicle braking functions' control device is connected;
- continuously establish said measure of instability based on a difference between an expected propulsion and an actual propulsion and continuously establish said expected propulsion by performing a simulation based on yaw rate and lateral acceleration.

The method may comprise the step of:
- continuously establish said actual propulsion by performing a calculation based on vehicle speed and steering rate.

By based on a difference between an expected propulsion and an actual propulsion establish a measure of instability a carefully, robust and reliable way to establish a measure of vehicle instability is provided for and unnecessary and / or hazardous use of the vehicle brake functions can thus be avoided. In this way, a method and a system involving that the vehicle can be driven in a safe way is provided. By establishing a measure of instability based on an expected propulsion and an actual propulsion a carefully, robust and reliable measure of the vehicle instability is provided.

According to one aspect of the invention a method for the improvement of safety when driving a vehicle is provided, comprising the steps of continuously establishing a measure of instability with respect to the vehicle and of continuously providing said measure of instability within a communications network internal to the vehicle, to which network at least one vehicle braking function's control device is connected.

Thus, a method is achieved which permits versatile use of an established measure of instability. Said at least one control device connected to the network may thus receive and use said measure of instability for at least one vehicle braking function stored therein, which control device may send a braking request based on said measure of instability.

The method according to the invention is primarily suitable in vehicle speeds exceeding 20 km/h, for example 40 km/h or 60 km/h or even higher speeds. Thus a method is provided for the improvement of safety when driving a vehicle at speeds where an accident, such as for example a collision or driving into a ditch, may potentially cause extensive damage to people and/or vehicles and/or loaded goods.

According to one aspect of the invention an unnecessary braking request from the said control device with respect to the said vehicle braking function may be avoided. By having regard to said measure of instability, the control device may assess whether it is suitable to make a braking request to a vehicle braking function stored therein.

The method may comprise the step to:
- with said control device, when required, assess whether or not said vehicle braking function should be used based on said measure of instability provided. Thus, a method is provided where use of a vehicle brake function connected with excessive risk may be avoided. Thus, a reduction of the number of requests regarding braking function from said at least one control device may be achieved, since this will only request a braking action in conditions which actually permit the application of a braking action.

The method may comprise the step to:
- with said control device, when required, assess whether or not said vehicle braking function should be used, or alternatively changed, based on said measure of instability provided.

The method may comprise the step to:
- with said control device, adjust the use of said vehicle braking function to need, as well as to said measure of instability.

Thus an advantageous method is provided, where said at least one vehicle braking function control device, in certain driving conditions of the vehicle, which comprise a certain measure of instability, may request less braking action than in driving conditions comprising a smaller measure of instability. Thus, a vehicle braking function may be used to a limited extent instead of not being used at all, which may be advantageous from for example a safety perspective.

The method may comprise the step to:
- based on said measure of instability, prioritise the use of at least one vehicle braking function of a number of available vehicle braking functions and/or change the distribution of braking action among different vehicle braking functions. Thus a method is provided advantageously, where the vehicle braking functions which are the most safety critical may be prioritised. The method may comprise the step to continuously establish which vehicle functions of all the vehicle functions that are active and/or the most important. Thus it is possible to efficiently prioritise which vehicle braking functions may have a braking action allocated for application of a braking action in suitable braking configurations of the vehicle, according to one aspect of the present invention. Thus it is possible to efficiently allocate braking action between different vehicle braking functions which may have a braking action allocated for application of a braking action in suitable braking configurations of the vehicle, according to one aspect of the present invention.

Said vehicle braking function may comprise braking of at least one vehicle wheel and/or braking of a so-called retarder in the vehicle. Said vehicle braking function may request and, where applicable, apply a braking action to a suitable set of vehicle wheels and/or to the said retarder. Individual control of braking action in different braking device configurations of the vehicle is thus possible.

Said communications network may comprise a CAN-bus. A vehicle specific set, comprising different control device configurations, may be connected to said CAN-bus. Thus a versatile method is provided which may be applied in many different types of vehicles. Further, according to one aspect of the invention it is possible to install, replace or remove one or several control device configurations comprising at least one vehicle braking function in the vehicle. Connection or disconnection of a control device configuration may be achieved in a simple manner by a fitter.

The method may comprise the step to:
- continuously establish said measure of instability, based on at least the parameters lateral acceleration in the vehicle and yaw rate on the one hand, and vehicle speed and steering angle rate on the other hand. Thus an accurate and robust manner of establishing said measure of instability is achieved.

The method may comprise the step to:
- continuously establish said measure of instability S, based on at least one or a combination of the parameters of vehicle speed, lateral acceleration of the vehicle, yaw rate, steering angle, steering angle rate and wheel slip in at least one of the vehicle's wheels.

The method may comprise the step to:
- continuously provide said measure of instability to a central control device, also named a controller, via said vehicle internal communications network. Thus said measure of instability may in an efficient manner be communicated further within the communications network which is internal to the vehicle. Said central control device may also handle requests regarding braking action from said at least one vehicle braking function's control device.

The method is easy to implement in existing motor vehicles. Software for the improvement of safety when driving a motor vehicle according to the invention may be installed in a control device of the vehicle when manufactured. A purchaser of the vehicle may thus be afforded the opportunity to choose the method function as an extra option. Alternatively, software comprising program code to perform the innovative method for improvement of safety when driving a motor vehicle may be installed in a control device of the vehicle when upgraded at a service station. In this case, the software may be uploaded into a memory in the control device.

Software comprising a program code for the improvement of safety when driving a vehicle may easily be updated or replaced. In addition, different parts of the software comprising program code for the improvement of safety when driving a vehicle may be replaced independently of each other. This modular configuration is advantageous from a maintenance perspective.

According to one aspect of the invention, a device for the improvement of safety when driving a vehicle is provided according to patent claim 11.

According to one aspect of the invention a device is provided for the improvement of safety when driving a vehicle, comprising:
- elements adapted to continuously establish a measure of instability relating to the vehicle;
- elements adapted to continuously provide said measure of instability within a communications network internal to the vehicle to which at least one vehicle braking function's control device is connected;
- elements adapted to continuously establish said measure of instability based on a difference between an expected propulsion and an actual propulsion and elements adapted to continuously establish said expected propulsion by performing a simulation based on yaw rate and lateral acceleration.

The device may comprise:
- elements adapted to continuously establish said actual propulsion by performing a calculation based on vehicle speed and steering rate.

According to one aspect of the invention, a device is provided for the improvement of safety when driving a vehicle, comprising:
- elements adapted to continuously establish a measure of instability relating to the vehicle; and
- elements adapted to continuously provide said measure of instability within a communications network internal to the vehicle, to which network at least one vehicle braking function's control device is connected.

Said at least one vehicle braking function's control device may consist of several control devices, each of which may have a suitable number of vehicle braking functions stored therein. Thus an advantageous distributed solution is achieved, where said measure of instability provided within the communications network may continuously be used by a number of different control devices in the vehicle, of which each control device may use a number of different vehicle braking functions stored therein simultaneously, based on said provided measure of instability.

In the device, said control device may be adapted, where needed, to assess whether or not said vehicle braking function should be used, based on said measure of instability provided.

In the device, said control device may be adapted, where needed, to assess whether or not said vehicle braking function should be used or alternatively changed, based on said measure of instability provided.

In the device said control device may be adapted to adjust the use of the said vehicle braking function to need, as well as to said measure of instability.

The device may comprise:
- elements adapted to, based on said measure of instability, prioritise the use of at least one vehicle braking function of a number of available vehicle braking functions and/or change the distribution of braking action among different vehicle braking functions.

In the device, said vehicle braking function may comprise braking of at least one vehicle wheel and/or braking of a so-called retarder in the vehicle.

In the device said communications network may comprise a CAN-bus.

In the device said vehicle braking functions may be any function chosen out of the group comprising lane departure warning, differential lock management, brake control, and incident compensation management.

The device may comprise:
- elements adapted to continuously establish said measure of instability based on at least the parameters lateral acceleration in the vehicle and yaw rate on the one hand, and vehicle speed and steering angle rate on the other hand.

The device may comprise:
- elements adapted to continuously establish said measure of instability S, based on at least one or a combination of the parameters of vehicle speed, lateral acceleration of the vehicle, yaw rate, steering angle, steering angle rate and wheel slip in at least one of the vehicle's wheels.

The device may comprise:
- elements adapted to continuously provide said measure of instability to a central control device, also named a controller, via said vehicle internal communications network.

The above objectives are achieved also with a vehicle comprising the device for improvement of safety when driving a vehicle.

The vehicle may be a motor vehicle. The vehicle may be a hybrid vehicle. The vehicle may be an electric vehicle.

The motor vehicle may be a truck, a bus or a car.

According to one aspect of the invention, a computer program is provided for the improvement of safety when driving a vehicle, wherein said computer program comprises program code stored in a computer-readable medium in order to cause an electronic control device or another computer, connected to the electronic control device, to perform the steps according to any of the patent claims 1-9.

According to one aspect of the invention, a computer program is provided for the improvement of safety when driving a vehicle, wherein said computer program comprises program code stored in a computer-readable medium in order to cause an electronic control device or another computer, connected to the electronic control device, to perform the steps according to any of the patent claims 1-9, where said program code is executed on said control device or another computer.

According to one aspect of the invention, a computer program is provided for the improvement of safety when driving a vehicle, wherein said computer program comprises program code to cause an electronic control device or another computer, connected to the electronic control device, to perform the steps according to any of the patent claims 1-9.

According to one aspect of the invention, a computer program is provided for the improvement of safety when driving a vehicle, wherein said computer program comprises program code to cause an electronic control device or another computer, connected to the electronic control device, to perform the steps according to any of the patent claims 1-9, where said program code is executed on said control device or another computer.

According to one aspect of the invention, a computer program product comprising program code stored in a computer-readable medium is provided to perform the method steps according to any of the patent claims 1-9, when said computer program is run in an electronic control device or in another computer, connected to the electronic control device.

According to one aspect of the invention, a computer program product comprising program code stored in a computer-readable medium is provided to perform the method steps according to any of the patent claims 1-9, where said computer program is run in an electronic control device or in another computer, connected to the electronic control device.

Additional objectives, advantages and novel features of the present invention will be apparent to one skilled in the art from the following details, and through exercising the invention. While the invention is described below, it should be apparent that the invention is not limited to the specifically described details. One skilled in the art, having access to the teachings herein, will recognise additional applications, modifications and incorporations in other areas, which are within the scope of the invention.

### GENERAL DESCRIPTION OF THE DRAWINGS

For a more complete understanding of the present invention and the additional objects and advantages thereof, reference is now made to the following detailed description, which is to be read together with the accompanying drawings, in which the same reference designations pertain to identical parts in the various figures, and in which:
Figure 1 schematically illustrates a vehicle, according to one embodiment of the invention;
Figure 2a schematically illustrates a sub-system of the vehicle shown in Figure 1, according to one embodiment of the invention;
Figure 2b schematically illustrates a sub-system of the vehicle shown in Figure 1, according to one embodiment of the invention;
Figure 3 schematically illustrates a diagram, according to one aspect of the invention;
Figure 4a schematically illustrates a flow diagram of a method, according to one embodiment of the invention;
Figure 4b schematically illustrates in more detail a flow diagram of a method, according to one embodiment of the invention;
Figure 4c schematically illustrates a flow diagram of a method according to one embodiment of the invention; and
Figure 5 schematically illustrates a computer, according to one embodiment of the invention.

### DETAILED DESCRIPTION OF THE FIGURES

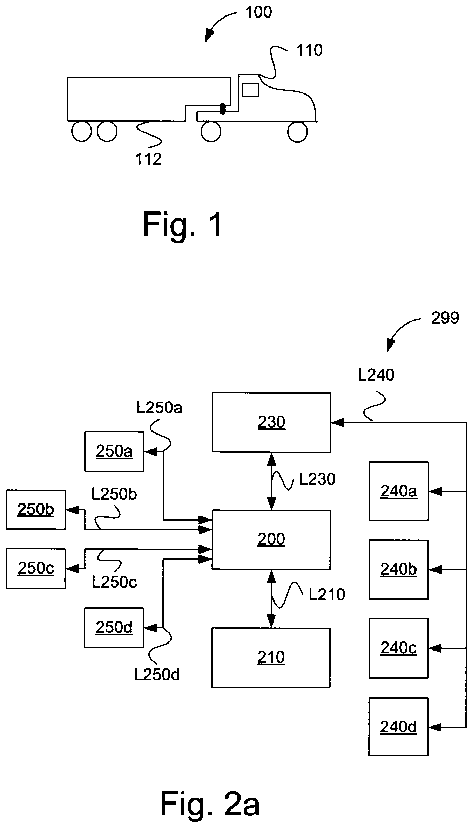

A side view of a vehicle 100 is shown with reference to Figure 1. The exemplary vehicle 100 consists of a tractor 110 and a trailer 112. The vehicle may be a heavy goods vehicle, such as a truck or a bus. The vehicle may alternatively be a car.

The vehicle 100 may be a motor vehicle. Said vehicle 100 may according to one embodiment be a hybrid powered vehicle. Said vehicle 100 may according to one embodiment be an electric car.

The term "link" herein refers to a communications link, which may be a physical line such as an opto-electronic communication line or a non-physical line such as a wireless connection, for example a radio or microwave link.

With reference to Figure 2a, a device 299 in the vehicle 100 is showed. Sub-system 299 may be arranged in the tractor 110.

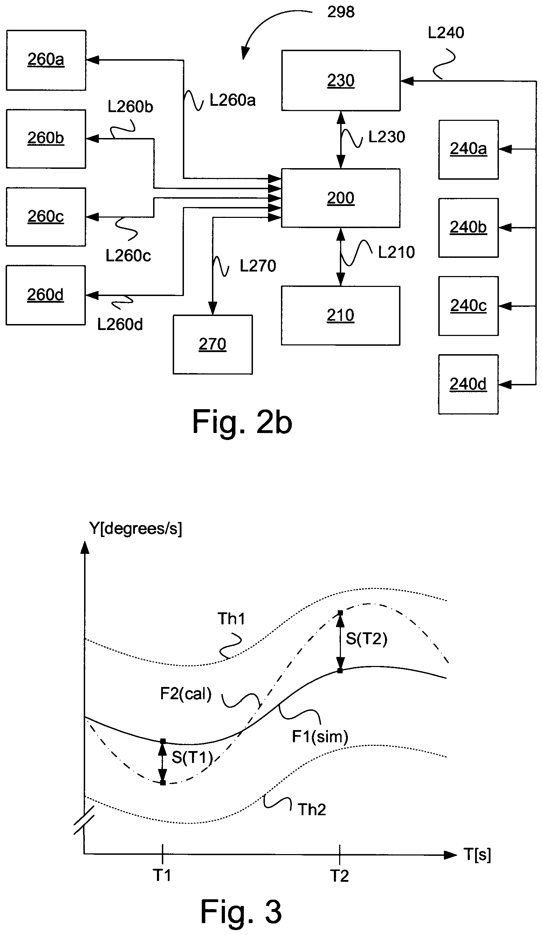

Sub-system 299 comprises a first control device 200. The first control device 200 is according to this example embodiment a braking device. The first control device 200 is arranged to control a number of different vehicle braking functions in the vehicle 100. Said vehicle braking functions may, according to one embodiment, consist of brake control routines, which are stored in a memory in the first control device 200. The first control device 200 is arranged to control a number of different vehicle braking functions in the vehicle 100. Said braking device configurations are described in more detail with reference to Figure 2b.

A second control device 210 is arranged for communication with the first control device 200 via a link L210. The second control device 210 may be detachably connected to the first control device 200. The second control device 210 may be a control device external to the vehicle 100. The second control device 210 may be arranged to carry out the innovative steps of the method according to the invention. The second control device 210 may be used to transfer software to the first control device 200, in particular software to perform the innovative method. The second control device 210 may alternatively be arranged for communication with the first control device 200 via an internal communications network in the vehicle 100. The second control device 210 may be arranged to carry out essentially similar functions as the first control device 200, such as for example to continuously establish a measure of instability with respect to the vehicle, and to continuously provide said measure of instability within a communications network internal to the vehicle, to which network at least one vehicle braking function is connected.

The first braking device 200 is arranged for communication with a third control device 230 via a link L230. Said link L230 may comprise a CAN-bus. Said link L230 is comprised according to one example embodiment in a communications network internal to the vehicle. Said third control device 230 is according to one embodiment a so-called controller. Said third control device 230 is arranged for communication with a number of control device configurations, manoeuvring elements and sensor configurations in the vehicle 100, while only a limited number of devices are illustrated in Figure 2a for clarity reasons. Said third control device 230 is arranged to drive the vehicle according to driving routines stored in various control device configurations and control devices in the vehicle 100.

A first sensor configuration 250a is arranged for communication with the first control device 200 via a link L250a. Said first sensor configuration 250a is arranged to continuously establish a prevailing lateral acceleration Alat in the vehicle 100. Said first sensor configuration 250a is arranged to continuously send a signal S1 to the first control device 200 via the link L250a. Said first signal S1 comprises information regarding said continuously established prevailing lateral acceleration Alat to the first control device 200. According to one example configuration, said first sensor configuration 250a is designed to be integrated with the first control device 200.

A second sensor configuration 250b is arranged for communication with the first control device 200 via a link L250b. Said second sensor configuration 250b is arranged to continuously establish a prevailing yaw angle, Yaw, in the vehicle 100. Said second sensor configuration 250b is arranged to continuously establish a prevailing yaw rate, Yawrate, in the vehicle 100. Said second sensor configuration 250b is arranged to continuously send a signal S2 to the first control device 200 via the link L250b. Said second signal S2 comprises information regarding said continuously established prevailing yaw rate, Yawrate, to the first control device 200. Said second signal S2 may comprise information regarding said continuously established prevailing yaw angle, Yaw, to the first control device 200. According to one example embodiment, said second sensor configuration 250b is designed to be integrated with the first control device 200.

A third sensor configuration 250c is arranged for communication with the first control device 200 via a link L250c. Said third sensor configuration 250c is arranged to continuously establish a prevailing steering angle, Steering, in the vehicle 100. Said third sensor configuration 250c is arranged to continuously establish a prevailing steering rate, Steeringrate, in the vehicle 100. Said third sensor configuration 250c is arranged to continuously send a signal S3 to the first control device 200 via the link L250c. Said first signal S3 comprises information regarding said continuously established prevailing steering rate, Steeringrate, to the first control device 200. Said third signal S3 comprises information regarding said continuously established prevailing steering angle, Steering, to the first control device 200. According to one example embodiment said third sensor configuration 250c is arranged at a steering wheel in the vehicle 100.

A fourth sensor configuration 250d is arranged for communication with the first control device 200 via a link L250d. Said fourth sensor configuration 250d is arranged to continuously establish a prevailing vehicle speed V in the vehicle 100. Said fourth sensor configuration 250d is arranged to continuously send a signal S4 to the first control device 200 via the link L250d. Said fourth signal S4 may comprise information regarding said continuously established prevailing vehicle speed V to the first control device 200. According to one example embodiment said fourth sensor configuration 250d is arranged in at least one wheel of the vehicle 100. Alternatively, said fourth sensor configuration 250d may be arranged in a suitable place of a transmission in the vehicle 100, for example in an output shaft from the gearbox.

The first control device 200 is arranged to continuously establish a measure of instability S, based on at least the parameters lateral acceleration Alat in the vehicle 100 and the yaw rate Yawrate on the one hand and the vehicle speed V and steering rate Steeringrate on the other hand. Said measure of instability is described in more detail with reference to Figure 3 below.

The first control device 200 is arranged to continuously establish said measure of instability based on a difference between an expected propulsion and an actual propulsion.

The first control device 200 may be arranged to continuously establish said expected propulsion by performing a simulation based on yaw rate Yawrate and lateral acceleration Alat.

The first control device 200 is arranged to continuously establish said actual propulsion by performing a calculation based on vehicle speed and steering rate.

A first control device configuration 240a is arranged for communication with the third control device 230 via a link L240. The first control device configuration 240a comprises at least one stored vehicle braking function. The first control device configuration 240a may be an engine control device. A second control device configuration 240b is arranged for communication with the third control device 230 via a link L240. The second control device configuration 240b comprises at least one stored vehicle braking function. The second control device configuration 240b may be a control device for a differential lock in the vehicle. The second control device configuration 240b may be a control device for all-wheel drive. A third control device configuration 240c is arranged for communication with the third control device 230 via a link L240. The third control device configuration 240c comprises at least one stored vehicle braking function. The third control device configuration 240c may be a control device for adaptive cruise control of the vehicle. A fourth control device configuration 240d is arranged for communication with the third control device 230 via a link L240. The fourth control device configuration 240d comprises at least one stored vehicle braking function. The fourth control device configuration 240d may be a control device for an automatic emergency brake in the vehicle.

The vehicle 100 may comprise a suitable number of control device configurations. These may be arranged for mutual communication through a suitable communications network internal to the vehicle, comprising e. g. the link L240. Each one of these control device configurations may consist of a control device existing in the vehicle.

Said link L240 may constitute a part of a communications network internal to the vehicle. Said link L240 may comprise a CAN-bus.

According to one aspect of the invention, the third control device 230 may be omitted, and said links L230 and L240 may consist of a communications link, which link may comprise a CAN-bus.

According to one aspect of the present invention, at least one of said control device configurations 240a-240d is adapted, where needed, to assess whether or not said vehicle braking function should be used based on said measure of instability S provided.

According to one aspect of the present invention, at least one of said control device configurations 240a-240d is adapted to adjust the use of said vehicle braking function to needs, as well as to said measure of instability S provided.

According to one aspect of the present invention, at least one of said control device configurations 240a-240d is adapted to, based on said measure of instability S, prioritise the use of at least one vehicle braking function of a number of available vehicle braking functions. Said vehicle braking function may be any one chosen out of the group comprising lane departure warning, differential lock management, brake control, and incident compensation management.

Thus a vehicle braking function relating to the function lane departure warning, based on said measure of instability S, may request and potentially obtain an allocated braking action for application in at least one braking device configuration of the vehicle. By e. g. applying the braking action to the vehicle wheels on one side of the vehicle, the function lane departure warning may achieve the objective of retaining the vehicle within a specific lane.

Thus a vehicle braking function relating to the function differential lock management may, based on said measure of instability S, request and potentially obtain an allocated braking action for application in at least one braking device configuration of the vehicle. By applying a braking action to a vehicle wheel or vehicle wheels in the vehicle suitable for the purpose, the function differential lock management may achieve the objective of connecting or disconnecting a differential lock in the vehicle's transmission.

Thus a vehicle braking function relating to the function brake control may, based on said measure of instability S, request and potentially obtain an allocated braking action for application in at least one braking device configuration of the vehicle. By applying the braking action to vehicle wheels on one side of the vehicle, the function's brake control may achieve the objective to control the vehicle's driving direction. This brake control is reminiscent to some extent of brake control in vehicles equipped with caterpillar treads.

Thus a vehicle braking function relating to the function incident compensation management, based on said measure of instability S, may request and potentially obtain an allocated braking action for application in at least one braking device configuration of the vehicle. By applying a braking action to the vehicle's wheels, for example only on one side of the vehicle, the function incident compensation management may achieve the objective to impact the vehicle's driving direction in the manner desired. One example of an incident may be that a hydraulic power steering hose in the vehicle is suffering from leakage. Thus a type of brake control is achieved, which to some extent is reminiscent of brake control in vehicles equipped with caterpillar treads.

The first control device 200 is arranged, based on a braking action request from a control device configuration, to establish whether the said request may or may not be granted. The first control device 200 is arranged to establish whether only a part of the requested braking action may be granted. The first control device 200 is arranged to send a response signal to the control device configuration that sent the request, which response signal comprises information regarding a result of said establishing process relating to said request.

The first control device 200 is arranged to continuously establish a measure of instability S in relation to the vehicle 100. The first control device 200 is arranged to continuously establish said measure of instability S based on the signals S1, S2, S3 and S4, which signals are continuously provided to the first control device 200 through said first, second, third and fourth sensor configurations, respectively, as set out above. Said measure of instability S is described in more detail with reference to Figure 3 below.

The first control device 200 is arranged to continuously provide said measure of instability S within the said internal communications network in the vehicle 100, to which network at least one vehicle braking function's control device is connected. Thus the first control device 200 is arranged to continuously send a signal SS to the third control device 230 via the link L230, which signal SS comprises information regarding said established measure of instability S. Said third control device 230 is arranged to forward said signal SS to said link L240.

According to one embodiment, the first control device 200 is arranged to send said signal SS with a predetermined suitable frequency F. Said frequency F may for example be 10 or 100 Hz. An updated measure of instability S may thus be provided to at least one of the control device configurations 240a-240d 10 or 100 times per second.

With reference to Figure 2b, a device 298 in the vehicle 100 is shown. The device 298 may be arranged in the tractor 110.

A first braking device configuration 260a is arranged at a vehicle wheel (not displayed) in the vehicle. Said braking device configuration 260a may comprise a manoeuvre element, also named an actuator, which is signal-connected with a link L260a to said third control device 230 and/or one or several of the control device configurations 240a, 240b, 240c and 240d. Said first braking device configuration 260a may comprise a wheel brake of a suitable type. Said first braking device configuration 260a may also, where appropriate, comprise equipment for pneumatic or hydraulic application of a braking action in the said vehicle wheel.

In the same manner, a second braking device configuration 260b, third braking device configuration 260c and fourth braking device configuration 260d is arranged at a respective vehicle wheel. Said braking device configurations 260b-260d may comprise a manoeuvre element, also named an actuator, which is signal connected to said third control device 230 and/or one or several of the control device configurations 240a, 240b, 240c and 240d with a link L260b, L260c and L260, respectively. It should be pointed out that the vehicle 100 may have a suitable number of braking device configurations arranged in order to brake a respective vehicle wheel. The braking device configurations 260a-260d may be controlled mutually independently with the first control device 200, the second control device 210, the third control device 230, and/or at least one of the control device configurations 240a-240d.

A fifth braking device configuration 270 is arranged in a transmission of the vehicle 100. Said fifth braking device configuration 270 is according to one embodiment a so-called retarder. Said fifth braking device configuration 270 may comprise a manoeuvre element, also named an actuator, which is signal-connected with a link L270 to said third control device 230 and/or one or several of the control device configurations 240a, 240b, 240c and 240d.

Vehicle braking functions stored in at least one of the control device configurations 240a-240d may thus be adapted to control braking action with a braking device in at least one vehicle wheel and/or the retarder 270, based on the said established measure of instability S.

At least one of said first, second, third and fourth control device configuration 240a-240d may be adapted, where needed, to assess whether or not said vehicle braking function should be used, or alternatively changed, based on said measure of instability provided.

According to one example, where a control device configuration requests a certain measure of braking action in said retarder 270, but where, through the first control device 200, only a lower braking action is granted to said retarder 270, said control device configuration may use said retarder 270 for braking to a limited extent, whilst other vehicle braking functions in the device may brake at least one vehicle wheel 260a-260d to achieve an appropriate braking action in the vehicle, based on said measure of instability S. Thus the initially requested vehicle braking function may change, according to one aspect of the invention.

Figure 3 schematically illustrates a diagram according to one aspect of the present invention. In the diagram, a yaw rate Y (degrees/second) in the vehicle 100 is specified as a function of the time T (seconds).

A first graph F1 (sim) is illustrated in the diagram. The first graph F1 (sim) is a function which depends on the yaw rate Yawrate and the lateral acceleration Alat.

A second graph F2 (cal) is illustrated in the diagram. The second graph F2 (cal) is a function which depends on the vehicle speed V and the steering rate Steeringrate.

The first control device 200 may be adapted to continuously establish said measure of instability S based on a difference between an expected propulsion and an actual propulsion. The first control device 200 may be adapted to continuously establish/estimate/calculate/model said measure of instability S based on a difference between an expected propulsion and an actual propulsion.

Said expected propulsion may be referred to as a first state. Said actual propulsion may be referred to as a second state.

Said expected propulsion may be established in an appropriate way. Said actual propulsion may be established in an appropriate way.

The first control device 200 is adapted to continuously establish said expected propulsion by performing a simulation based on yaw rate Yawrate and lateral acceleration Alat.

The first control device 200 is adapted to continuously establish said actual propulsion by performing a calculation based on vehicle speed V and steering rate Steeringrate.

The first control device 200 comprises a stored vehicle model which continuously simulates values for the first graph F1 (sim). Thus a simulation is carried out with the said stored vehicle model, based on values for the magnitudes yaw rate, Yawrate and lateral acceleration Alat, which values are continuously detected with the first sensor configuration 250a and the second sensor configuration 250b, respectively.

Thus a simulation is performed based on values for the magnitudes yaw rate Yawrate and lateral acceleration Alat. These values may continuously be detected by the first sensor configuration 250a respectively the second sensor configuration 250b.

Thus, a continuous estimation is established of how the vehicle 100 is expected to behave when the vehicle's wheels have adequate grip on the base and thus do not slip or slide. This state is also named an expected propulsion of the vehicle 100.Thus an expected propulsion of the vehicle 100 is established where all of the vehicle wheels have good grip on the road surface.

The first control device 200 is also arranged to continuously calculate values for the second graph F2 (cal). Thus a calculation is made based on values relating to the magnitudes of vehicle speed V and steering rate Steeringrate, which values are continuously detected with the third sensor configuration 250c and the fourth sensor configuration 250bd, respectively. Thus a calculation is performed based on values relating to the magnitudes of vehicle speed V and steering rate Steeringrate. Thus a measure is established continuously of how the vehicle 100 actually behaves during the prevailing propulsion. Thus prevailing conditions relating to the operation and the surrounding environment are taken into account. This state is also named the actual propulsion of the vehicle 100. Thus an actual propulsion of the vehicle 100 is established where all of the vehicle wheels according to one example not necessarily have good grip on the road surface. According to one embodiment no simulation is hereby performed to continuously establish values for the second graph F2(cal).

According to one example embodiment of the present invention, said measure of instability S may be established based on a difference between said first graph F1 (sim) and said second graph F2(cal). In other words, said measure of instability S may be established based on a difference between said expected propulsion and said actual propulsion.

Said difference may continuously be established according to one embodiment. Said difference may be established intermittent according to one embodiment.

According to one embodiment the graph F1 (sim) may be connected with two boundary functions Th1 and Th2, which boundary functions relate to the respective boundaries of instability. If the measure of instability S indicates that F1 (sim) and F2 (cal) at a given point in time differ from each other in such a way that F2 (cal) is outside Th1 or Th2, the vehicle is deemed to be driven in an unstable condition. According to one definition, the measure of instability S may be provided as a percentage (%), where no difference between F1 (Sim) and F2 (cal) corresponds to 0%, and where a difference between F1 (Sim) and F2 (cal) which is consistent with Th1 or Th2 corresponds to 100%.

The first control device 200 may be arranged to establish if said vehicle is driven in an unstable condition or not. The first control device 200 may be arranged to establish if said vehicle is driven in an unstable condition or not based on said measure of instability S. The first control device 200 may be arranged to establish if said vehicle is driven in an unstable condition or not based on said measure of instability S and said boundary functions Th1 and Th2. The first control device 200 may be arranged to establish if said vehicle is driven in an unstable condition or not based on said measure of instability and at least one of said boundary functions Th1 and Th2. The first control device 200 may be arranged to establish if said vehicle is driven in an unstable condition or not based on said difference and at least one of said boundary condition Th1 and Th2.

In Figure 3 a measure of instability S(T1) is illustrated at a first point in time T1. At the first point in time T1, the measure of instability S(T1) is approximately -50%. At the second point in time T2, the measure of instability S(T1) is approximately +75%.

According to one embodiment, said measure of instability S may be specified with a symbol. A symbol in said measure of instability may correlate to oversteer or understeer of the vehicle, having regard to in which direction (right or left) the vehicle is turning.

According to one embodiment said measure of instability S may be specified as an absolute amount and given a size.

It should be pointed out that the higher the absolute amount which the measure of instability S presents at a given point in time, the higher the risk of skidding or slipping in the vehicle 100.

Said measure of instability S may be specified continuously or in discrete steps, for example in steps of 5% or 10%.

According to one embodiment said measure of instability S may be established based on at least one of the parameters vehicle speed V, lateral acceleration Alat of the vehicle, yaw rate Yawrate, steering angle Steeringangle, steering rate Steeringrate and wheel slip Slip in at least one of the vehicle's wheels 260a-260d. Thus there are elements (not showed) to continuously establish wheel slip in the vehicle's wheels 260a-260d. According to one embodiment, said first control device 200 is arranged through suitable equipment to continuously establish wheel slip Slip in at least one of the vehicle's wheels 260a-260d.

According to one embodiment said measure of instability S may be established based on a combination of two or more parameters: vehicle speed V, lateral acceleration Alat of the vehicle, yaw rate Yawrate, steering angle Steeringangle, steering rate Steeringrate and wheel slip Slip in at least one of the vehicle's wheels 260a-260d.

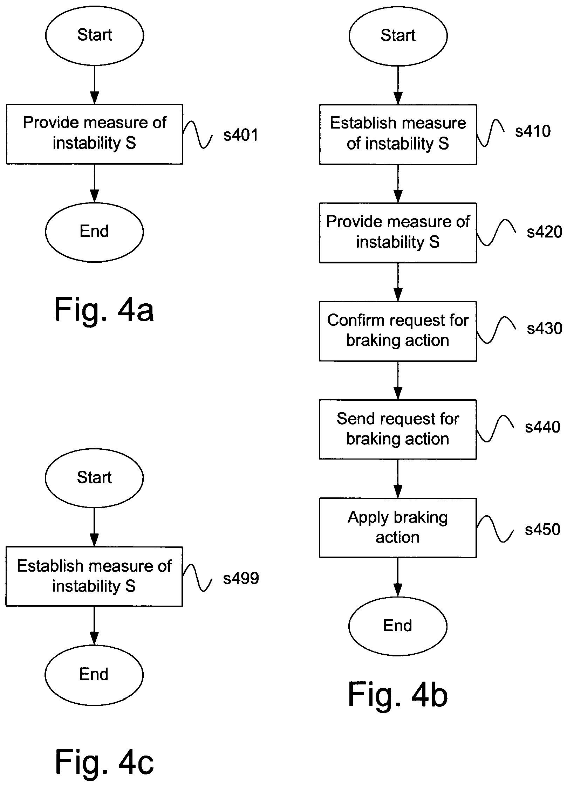

Figure 4a schematically illustrates a flow diagram of a method for the improvement of safety when driving a vehicle, according to one embodiment of the invention.

The method comprises a first method step s401. The step s401 comprises the steps to:
- continuously establish a measure of instability relating to the vehicle; and
- continuously provide said measure of instability within a communications network internal to the vehicle, to which network at least one vehicle braking function's control device is connected. The method is completed after step s401.

Figure 4b schematically illustrates a flow diagram of a method for the improvement of safety when driving a vehicle, according to one embodiment of the invention.

The method comprises an initial method step of the procedure s410. The method step s410 comprises the step to continuously establish a measure of instability S in relation to the vehicle 100. Said measure of instability may be established in a suitable manner, for example as described with reference to Figure 3 above.

According to one example the method step s410 may comprise the step to continuously establish said measure of instability S, based on at least one or a combination of the parameters vehicle speed V, lateral acceleration Alat of the vehicle, yaw rate Yawrate, steering angle Steeringangle, steering rate Steeringrate and wheel slip Slip in at least one of the vehicle's wheels 260a-260d.

The method step s410 may comprise the step to continuously establish said measure of instability S, based on a difference between an expected propulsion and an actual propulsion. This can be performed by means of the first control device 200.

The method step s410 may comprise the step to continuously establish said expected propulsion by performing a simulation based on yaw rate Yawrate and lateral acceleration Alat. This can be performed by means of the first control device 200.

The method step s410 may comprise the step to continuously establish said actual propulsion by performing a calculation based on vehicle speed V and steering rate Steeringrate. This can be performed by means of the first control device 200.

Following the method step s410, a subsequent method step s420 is completed.

The method step s420 comprises the step to continuously provide said measure of instability S within a communications network internal to the vehicle, to which network at least one vehicle braking function's control device configuration is connected. Said communications network may comprise the links L230 and L240. Following the method step s420, a subsequent method step s430 is completed.

The method step s430 comprises the step to establish a request for braking action in at least one braking device configuration 260a-260d and/or a braking device configuration 270. The method step s430 may comprise the step to, where needed, determine whether or not said vehicle braking function should be used, based on said measure of instability S provided. The method step s430 may comprise the step to, through said control device configuration, adapt the use of said vehicle's braking function to needs, as well as to said measure of instability S. The method step s430 may comprise the step to, based on said measure of instability, prioritise the use of at least one vehicle braking function of a number of available vehicle braking functions.

Said request for braking action in at least one braking device configuration 260a-260d and/or braking device configuration 270 may comprise information regarding a size and duration configuration in relation to the requested braking action. Following the method step s430, a subsequent method step s440 is completed.

The method step s440 comprises the step to send aid established request for braking action from said control device to the first control device 200, the second control device 210 or the third control device 230. Following the method step s440, a subsequent method step s450 is completed.

The method step s450 comprises the step to, where appropriate, apply said requested braking action in at least one braking device configuration 260a-260d and/or the braking device configuration 270. The method step s450 also comprises the steps to establish whether said request may be granted and to send a response to the requesting control device configuration. Said response may comprise information regarding whether or not the request is granted, alternatively that the request is granted with certain restrictions, for example that only 50% or 75% of the requested braking action may be granted. In the event the request is granted with certain restrictions, the requesting control device configuration may establish whether or not a limited braking action should be applied. Said establishing process may occur based on responses made and/or measures of instability specified. Following the method step s450, the method is completed.

Figure 4c schematically illustrates a flow diagram of a method for the improvement of safety when driving a vehicle, according to one embodiment of the invention.

The method comprises a first method step s499. The method step s499 comprises the steps to:
- continuously establish a measure of instability with respect to the vehicle;
- continuously provide said measure of instability within a communications network internal to the vehicle to which network at least one vehicle braking functions' control device is connected; and
- continuously establish said measure of instability based on a difference between an expected propulsion and an actual propulsion.

After the step s499 the method is ended.

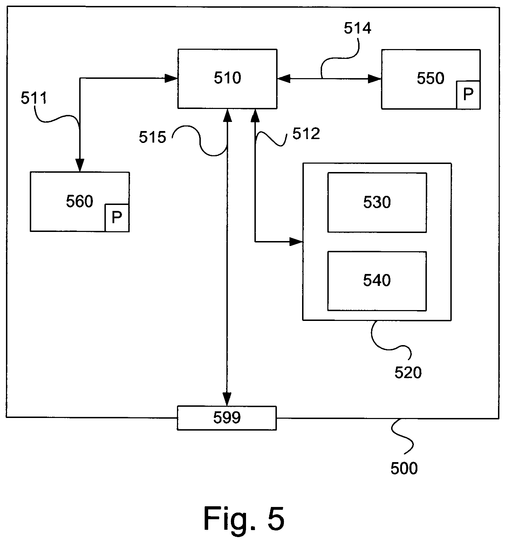

With reference to Figure 5, a diagram of an embodiment of system 500 is shown. The control units 200, 210 and 230, which are described with reference to Figure 2a and Figure 2b may in one embodiment comprise the system 500. The control device configurations 240a, 240b, 240c and 240d which are described with reference to Figure 2a and Figure 2b may in one embodiment comprise the system 500. The unit 500 includes a non-volatile memory 520, a data processing unit 510 and a read/write memory 550. The non-volatile memory 520 has a first memory part 530 wherein a computer program, such as an operative system, is stored to control the function of the unit 500. Further, the unit 500 includes a bus controller, a serial communications port, an I/O device, an A/D converter, a date-time input and transmission unit, an event counter and an interrupt controller (not displayed). The non-volatile memory 520 also has a second memory part 540.

Thus a computer program P is provided comprising procedures for the improvement of safety when driving a vehicle 100, according to the innovative method.

The computer program P may comprise procedures to continuously establish said measure of instability based on a difference between an expected propulsion and an actual propulsion. The computer program P may comprise procedures to continuously establish said expected propulsion by performing a simulation based on yaw rate Yawrate and lateral acceleration Alat.

The computer program P may comprise procedures to continuously establish said actual propulsion by performing a calculation based on vehicle speed V and steering rate Steeringrate.

The computer program P may comprise procedures to continuously establish a measure of instability S in relation to the vehicle 100. The computer program P may comprise routines to continuously provide said measure of instability S within a communications network internal to the vehicle, which network may comprise the links L230 and L240, to which network at least one vehicle braking function's control device is connected. The computer program P may comprise procedures to, where needed, determine whether or not said vehicle braking function should be used based on said measure of instability S provided. The computer program P may comprise procedures to adapt the use of said vehicle's braking function to need, as well as to said measure of instability S. The computer program P may comprise procedures, based on said measure of instability S, to prioritise the use of at least one vehicle braking function of a number of available vehicle braking functions. The computer program P may comprise routines to control braking of at least one vehicle wheel 260a-260d and/or braking of a so-called retarder 270 in the vehicle, based on said measure of instability S. The computer program P may comprise procedures to request a braking action for at least one vehicle wheel 260a-260d and/or braking of a so-called retarder 270 in the vehicle 100 based on said measure of instability S. The computer program P may comprise procedures to request a braking action for said vehicle braking function in relation to at least one out of the group comprising lane departure warning, differential lock management, brake control and incident compensation management. The computer program P may comprise procedures to continuously establish said measure of instability S based on at least the parameters lateral acceleration Alat in the vehicle and yaw rate Yawrate on the one hand, and vehicle speed V and steering rate Steeringrate on the other hand. The computer program P may comprise procedures to continuously establish said measure of instability S, based on at least one or a combination of the parameters vehicle speed V, lateral acceleration Alat of the vehicle, yaw rate Yawrate, steering angle Steeringangle, steering rate Steeringrate and wheel slip Slip in at least one of the vehicle's wheels 260a-260d. The computer program P may comprise procedures to continuously provide said measure of instability S via the said communications network internal to the vehicle, to a central control device 230, also named a controller.

The program P may be stored in an executable manner or in a compressed manner in a memory 560 and/or a read/write memory 550.

A statement that the data processing unit 510 performs a certain function means that the data processing unit 510 performs a certain part of the program which is stored in the memory 560 or a certain part of the program stored in the read/write memory 550.

The data processing unit 510 may communicate with a data port 599 via a data bus 515. The non-volatile memory 520 is intended for communication with the data processing unit 510 via a data bus 512. The separate memory 560 is intended for communication with the data processing unit 510 via a data bus 511. The read/write memory 550 is arranged to communicate with the data processing unit 510 via a data bus 514. The links L210, L230, L240, L250a-L250d, L260a-L260d and L270, may be connected to the data port 599 (see Figure 2a and Figure 2b).

When data is received in the data port 599, it is temporarily stored in the second memory part 540. When in-data received is temporarily stored, the data processing unit 510 is ready to carry out execution of code in the manner described above. According to one embodiment, signals, e.g. S1, S2, S3 and S4, received in the data port 599, comprise information regarding lateral acceleration Alat in the vehicle, yaw rate Yawrate, vehicle speed V and steering rate Steeringrate, respectively. According to one embodiment, signals received in the data port 599 comprise information regarding said established measure of instability S. The signals received in the data port 599 may be used by the system 500 to continuously provide said measure of instability S within a communications network internal to the vehicle, to which network at least one vehicle braking function's control device is connected.

Parts of the methods described herein may be carried out by the unit 500 with the help of the data processing unit 510, which runs the program stored in the memory 560 or the read/write memory 550. When the unit 500 runs the program, the procedures described herein are executed.

The foregoing description of the preferred embodiments of the present invention has been furnished for illustrative and descriptive purposes. It is not intended to be exhaustive, or to limit the invention to the variants described. Many modifications and variations will obviously be apparent to one skilled in the art. The embodiments have been chosen and described in order to best explicate the principles of the invention and its practical applications, and to thereby enable one skilled in the art to understand the invention in terms of its various embodiments and with the various modifications that are applicable to its intended use.

## Claims

1. Method for the improvement of safety when driving a vehicle (100) comprising the step to:
- continuously (s410) establish a measure of instability relating to the vehicle, where said measure of instability is a measure of vehicle instability; to
- continuously provide (s420) said measure of instability within a communications network internal to the vehicle (L230, L240), to which network at least one vehicle braking functions' control device (240a; 240b; 240c; 240d) is connected, and to
- continuously establish said measure of instability based on a difference between an expected propulsion and an actual propulsion, **characterized in that** said expected propulsion is continuously established by performing a simulation based on yaw rate (Yawrate) and lateral acceleration (Alat).

2. Method according to claim 1, comprising the step to:
- continuously establish said actual propulsion by performing a calculation based on vehicle speed (V) and steering rate (Steering rate).

3. Method according to any of the previous claims , comprising the step to:
- with the said control device (240a; 240b; 240c; 240d), when required, assess whether or not the said vehicle braking function should be used based on said measure of instability provided.

4. Method according to any of the previous claims, comprising the step to:
- with the said control device (240a; 240b; 240c; 240d), adjust the use of the said vehicle braking function to need, as well as to said measure of instability.

5. Method according to any of the previous claims, comprising the step to:
- based on said measure of instability, prioritise the use of at least one vehicle braking function of a number of available vehicle braking functions and/or change the distribution of braking action among different vehicle braking functions.

6. Method according to any of the previous claims, wherein said vehicle braking function comprises braking of at least one vehicle wheel (260a; 260b; 260c; 260d) and/or braking of a retarder (270) in the vehicle.

7. Method according to one of the previous claims, wherein said communications network (L230, L240) comprises a CAN-bus.

8. Method according to any of the previous claims, wherein said vehicle braking function is one out of a group comprising lane departure warning, differential lock management, brake control, and incident compensation management.

9. Method according to any of the previous claims, comprising the step to:
- continuously establish (s410) said measure of instability, based on at least one or a combination of the parameters of vehicle speed, lateral acceleration of the vehicle, yaw rate, steering angle, steering rate and wheel slip in at least one of the vehicle's wheels (260a-260d).

10. Method according to any of the previous claims, comprising the step to:
- continuously provide (s420) said measure of instability to a central control device (230), also named a controller, via said communications network internal to the vehicle (L230, L240).

11. Device for the improvement of safety when driving a vehicle (100) comprising:
- elements (200; 210) adapted to continuously establish a measure of instability relating to the vehicle (100), where said measure of instability is a measure of vehicle instability,
- elements (200; 210) adapted to continuously provide said measure of instability within a communications network internal to the vehicle (L230, L240) to which network at least one vehicle braking function's control device (240a; 240b; 240c;240d) is connected, and
- elements (200; 210; 500) adapted to continuously establish said measure of instability based on a difference between an expected propulsion and an actual propulsion
**characterized in that** said elements (200; 210; 500) are adapted to continuously establish said expected propulsion by performing a simulation based on yaw rate (Yawrate) and lateral acceleration (Alat).

12. Device according to claim 11, comprising:
- elements (200; 210; 500) adapted to continuously establish said actual propulsion by performing a calculation based on vehicle speed (V) and steering rate (Steering rate).

13. Device according to any of claims 11-12, wherein said control device (240a; 240b; 240c; 240d) is adapted, where needed, to assess whether or not said vehicle braking function should be used based on said measure of instability provided.

14. Device according to any of claims 11-13, wherein said control device (240a; 240b; 240c; 240d) is adapted to adjust the use of said vehicle braking function to need, as well as to said measure of instability.

15. Device according to any of claims 11-14, comprising:
- elements (240a; 240b; 240c; 240d) adapted, based on said measure of instability, to prioritise the use of at least one vehicle braking function of a number of available vehicle braking functions and/or to change the distribution of braking action among different vehicle braking functions.

16. Device according to any of claims 11-15, wherein said vehicle braking function comprises braking of at least one vehicle wheel and/or braking of a retarder in the vehicle.

17. Device according to any of the claims 11-16, wherein said communications network (L230, L240) comprises a CAN-bus.

18. Device according to any of the claims 11-17, wherein said vehicle braking function is one out of a group comprising lane departure warning, differential lock management, steering brake, and incident compensation management.

19. Device according to any of claims 11-18, comprising:
- elements (200; 210) adapted to continuously establish said measure of instability, based on at least one or a combination of the parameters of vehicle speed, lateral acceleration of the vehicle, yaw rate, steering angle, steering rate and wheel slip in at least one of the vehicle's wheels (260a-260d).

20. Device according to any of claims 11-19, comprising:
- elements (200; 210) adapted to continuously provide said measure of instability to a central control device (230), also named a controller, via said communications network internal to the vehicle.

21. Vehicle (100; 110), comprising a device according to any of claims 11-20.

22. Motor vehicle (100; 110) according to claim 21, wherein the vehicle is a truck, a bus or a car.

23. Computer program (P) for improvement of safety when driving a vehicle (100), wherein said computer program (P) comprises program code to cause an electronic control device (200; 240a-240c; 500), or another computer (210; 230; 240a-240d; 500) connected to the electronic control device (200; 240a-240d; 500) to perform the steps according to any of the patent claims 1-10.

24. Computer program product, comprising program code stored in a computer-readable medium, in order to perform the steps according to any of claims 1-10, when said computer program is run in an electronic control device (200; 240a-240d; 500), or in another computer (210; 240a-240d; 500) connected to the electronic control unit (200; 240a-240d; 500).

## Patentansprüche

1. Verfahren zur Erhöhung der Sicherheit beim Fahren eines Fahrzeugs (100), umfassend den Schritt des:
- kontinuierliches Feststellens (s410) eines das Fahrzeug betreffenden Instabilitätsmaßes, wobei das Instabilitätsmaß ein Fahrzeuginstabilitätsmaß ist, des
- kontinuierlichen Bereitstellens (s420) des Instabilitätsmaßes innerhalb eines Kommunikationsnetzwerks in dem Fahrzeug (L230, L240), wobei mit dem Netzwerk wenigstens eine Fahrzeugbremsfunktionssteuereinrichtung (240a; 240b; 240c, 240d) verbunden ist, und des
- kontinuierlichen Feststellens des Instabilitätsmaßes basierend auf einer Differenz zwischen einem erwarteten Vortrieb und einem tatsächlichen Vortrieb, **dadurch gekennzeichnet, dass** der erwartete Vortrieb kontinuierlich festgestellt wird durch Ausführen einer Simulation auf der Basis einer Gierrate (Yawrate) und einer Querbeschleunigung (Alat).

2. Verfahren nach Anspruch 1, umfassend den Schritt des:
- kontinuierlichen Feststellens des tatsächlichen Vortriebs durch Ausführen einer Berechnung auf der Basis der Fahrzeuggeschwindigkeit (V) und der Lenkgeschwindigkeit (Steering rate).

3. Verfahren nach einem der vorhergehenden Ansprüche, umfassend den Schritt des:
- Bestimmens, mit der Steuereinrichtung (240a; 240b; 240c; 240d), falls erforderlich, ob die Fahrzeugbremsfunktion basierend auf dem bereitgestellten Instabilitätsmaß benutzt werden soll oder nicht.

4. Verfahren nach einem der vorhergehenden Ansprüche, umfassend den Schritt des:
- Einstellens, mit der Steuereinrichtung (240a; 240b; 240c; 240d), der Verwendung der Fahrzeugbremsfunktion nach Bedarf und gemäß dem Instabilitätsmaß.

5. Verfahren nach einem der vorhergehenden Ansprüche, umfassend den Schritt des:
- Priorisierens, basierend auf dem Instabilitätsmaß, der Verwendung der wenigstens einen Fahrzeugbremsfunktion einer Reihe verfügbarer Fahrzeugbremsfunktionen und/oder des Änderns der Verteilung einer Bremswirkung zwischen verschiedenen Fahrzeugbremsfunktionen.

6. Verfahren nach einem der vorhergehenden Ansprüche, wobei die Fahrzeugbremsfunktion ein Abbremsen zumindest eines Fahrzeugrades (260a; 260b; 260c; 260d) und/oder ein Abbremsen eines Retarders (270) in dem Fahrzeug umfasst.

7. Verfahren nach einem der vorhergehenden Ansprüche, wobei das Kommunikationsnetzwerk (L230, L240) einen CAN-Bus aufweist.

8. Verfahren nach einem der vorhergehenden Ansprüche, wobei die Fahrzeugbremsfunktion eine ist aus einer Gruppe umfassend eine Spurverlassenswarnung, eine Differenzialsperrensteuerung, eine Bremssteuerung und eine Zwischenfallskompensationssteuerung.

9. Verfahren nach einem der vorhergehenden Ansprüche, umfassend den Schritt des:
- kontinuierlichen Feststellens (s410) des Instabilitätsmaßes basierend auf zumindest einem oder einer Kombination der Parameter Fahrzeuggeschwindigkeit, Fahrzeugquerbeschleunigung, Gierrate, Lenkwinkel, Lenkgeschwindigkeit und Radschlupf an wenigstens einem der Fahrzeugräder (260a-260d).

10. Verfahren nach einem der vorhergehenden Ansprüche, umfassend den Schritt des:
- kontinuierlichen Lieferns (s420) des Instabilitätsmaßes an eine Zentralsteuereinrichtung (230), auch als eine Steuereinheit bezeichnet, über das Kommunikationsnetzwerk in dem Fahrzeug (L230, L240).

11. Vorrichtung zur Erhöhung der Sicherheit beim Fahren eines Fahrzeugs (100), mit:
- Komponenten (200; 210), die zum kontinuierlichen Feststellen eines das Fahrzeug (100) betreffenden Instabilitätsmaßes eingerichtet sind, wobei das Instabilitätsmaß ein Fahrzeuginstabilitätsmaß ist,
- Komponenten (200; 210), die zum kontinuierlichen Bereitstellen des Instabilitätsmaßes innerhalb eines Kommunikationsnetzwerkes in dem Fahrzeug (L230, L240) eingerichtet sind, wobei zumindest eine Fahrzeugbremsfunktionssteuereinrichtung (240a; 240b; 240c; 240d) mit dem Netzwerk verbunden ist, und
- Komponenten (200; 210; 500), die zum kontinuierlichen Feststellen des Instabilitätsmaßes auf der Basis einer Differenz zwischen einem erwarteten Vortrieb und einem tatsächlichen Vortrieb eingerichtet sind,
**dadurch gekennzeichnet, dass**
die Komponenten (200; 210; 500) dazu eingerichtet sind, den erwarteten Vortrieb kontinuierlich festzustellen durch Ausführen einer Simulation basierend auf einer Gierrate (Yawrate) und einer Querbeschleunigung (Alat).

12. Vorrichtung nach Anspruch 11, mit:
- Komponenten (200; 210; 500), die zum kontinuierlichen Feststellen des tatsächlichen Vortriebs durch Ausführen einer Berechnung auf der Basis der Fahrzeuggeschwindigkeit (V) und der Lenkgeschwindigkeit (Steering rate) eingerichtet sind.

13. Vorrichtung nach einem der Ansprüche 11 bis 12, wobei die Steuereinrichtung (240a; 240b; 240c; 240d) dazu eingerichtet ist, falls erforderlich zu bestimmen, ob die Fahrzeugbremsfunktion basierend auf dem bereitgestellten Instabilitätsmaß verwendet werden soll oder nicht.

14. Vorrichtung nach einem der Ansprüche 11 bis 13, wobei die Steuereinrichtung (240a; 240b; 240c; 240d) dazu eingerichtet ist, die Verwendung der Fahrzeugbremsfunktion nach Bedarf sowie gemäß dem Instabilitätsmaß einzustellen.

15. Vorrichtung nach einem der Ansprüche 11 bis 14, mit:
- Komponenten (240a; 240b; 240c; 240d), die dazu eingerichtet sind, basierend auf dem Instabilitätsmaß die Verwendung wenigstens einer Fahrzeugbremsfunktion einer Reihe verfügbarer Fahrzeugbremsfunktionen zu Priorisieren und/oder die Verteilung einer Bremswirkung zwischen verschiedenen Fahrzeugbremsfunktionen zu ändern.

16. Vorrichtung nach einem der Ansprüche 11 bis 15, wobei die Fahrzeugbremsfunktion ein Abbremsen wenigstens eines Fahrzeugrades und/oder ein Abbremsen eines Retarders in dem Fahrzeug umfasst.

17. Vorrichtung nach einem der Ansprüche 11 bis 16, wobei das Kommunikationsnetzwerk (L230, L240) einen CAN-Bus aufweist.

18. Vorrichtung nach einem der Ansprüche 11 bis 17, wobei die Fahrzeugbremsfunktion eine ist aus einer Gruppe umfassend eine Spurverlassenswarnung, eine Differenzialsperrensteuerung, eine Lenkungsbremsung und eine Zwischenfallskompensationssteuerung.

19. Vorrichtung nach einem der Ansprüche 11 bis 18, mit:
- Komponenten (200; 210), die dazu eingerichtet sind, das Instabilitätsmaß kontinuierlich festzustellen basierend auf zumindest einem oder einer Kombination der Parameter Fahrzeuggeschwindigkeit, Fahrzeugquerbeschleunigung, Gierrate, Lenkwinkel, Lenkgeschwindigkeit und Radschlupf an wenigstens einem der Fahrzeugräder (260a-260d).

20. Vorrichtung nach einem der Ansprüche 11 bis 19, mit:
- Komponenten (200; 210), die dazu eingerichtet sind, das Instabilitätsmaß kontinuierlich an eine Zentralsteuereinrichtung (230), auch als eine Steuereinheit bezeichnet, über das Kommunikationsnetzwerk in dem Fahrzeug zu liefern.

21. Fahrzeug (100; 110) mit einer Vorrichtung nach einem der Ansprüche 11 bis 20.

22. Kraftfahrzeug (100; 110) nach Anspruch 21, wobei das Fahrzeug ein Lastwagen, ein Bus oder ein PKW ist.

23. Computerprogramm (P) zur Erhöhung der Sicherheit beim Fahren eines Fahrzeugs (100), wobei das Computerprogramm (P) einen Programmcode umfasst, um eine elektronische Steuereinrichtung (200; 240a-240c; 500) oder einen anderen mit der elektronischen Steuereinrichtung (200; 240a-240d; 500) verbundenen Computer (210; 230; 240a-240d; 500) dazu zu veranlassen, die Schritte gemäß einem der Patentansprüche 1 bis 10 auszuführen.

24. Computerprogrammprodukt, mit einem Programmcode, der auf einem computerlesbaren Medium gespeichert ist, um die Schritte gemäß einem der Ansprüche 1 bis 10 auszuführen, wenn das Computerprogramm auf einer elektronischen Steuereinrichtung (200; 240a-240c; 500) oder einem anderen mit der elektronischen Steuereinrichtung (200; 240a-240d; 500) verbundenen Computer (210; 230; 240a-240d; 500) abläuft.

## Revendications

1. Procédé pour l'amélioration de la sécurité lors de la conduite d'un véhicule (100) comprenant l'étape de :
- l'établissement en continu (s410) d'une mesure de l'instabilité liée au véhicule, où ladite mesure de l'instabilité est une mesure de l'instabilité du véhicule ; pour
- la fourniture en continu (s420) de ladite mesure d'instabilité au sein d'un réseau de communication interne au véhicule (L230, L240), au moins un dispositif de contrôle des fonctions de freinage du véhicule (240a ; 240b ; 240c ; 240d) est connecté à ce réseau, et pour
- l'établissement en continu de ladite mesure de l'instabilité basée sur une différence
entre une propulsion attendue et une propulsion réelle,
**caractérisée en ce que** ladite
propulsion attendue est établie en continu en effectuant une simulation
basé sur la vitesse de lacet (Vitessedelacet) et l'accélération latérale (Alat).

2. Procédé selon la revendication 1, comprenant l'étape suivante :
- l'établissement en continu de ladite propulsion réelle en effectuant un calcul basé sur la vitesse du véhicule (V) et le taux de braquage (Taux de braquage).

3. Procédé selon l'une quelconque des revendications précédentes, comprenant l'étape suivante :
- avec ledit dispositif de commande (240a ; 240b ; 240c ; 240d), si nécessaire, l'évaluation si ladite fonction de freinage du véhicule doit être utilisée ou ne doit pas être utilisée sur la base de ladite mesure d'instabilité fournie.

4. Procédé selon l'une quelconque des revendications précédentes, comprenant l'étape suivante :
- avec ledit dispositif de commande (240a ; 240b ; 240c ; 240d), l'ajustement de l'utilisation de ladite fonction de freinage du véhicule au besoin, ainsi que ladite mesure d'instabilité.

5. Procédé selon l'une quelconque des revendications précédentes, comprenant l'étape suivante :
- sur la base de ladite mesure d'instabilité, donner la priorité à l'utilisation d'au moins une fonction de freinage du véhicule d'un nombre de fonctions de freinage de véhicule disponibles et/ou le changement de la distribution d'action de freinage parmi différentes fonctions de freinage du véhicule.

6. Procédé selon l'une quelconque des revendications précédentes, dans lequel ladite fonction de freinage du véhicule comprend le freinage d'au moins une roue de véhicule (260a ; 260b ; 260c ; 260d) et/ou le freinage d'un ralentisseur (270) dans le véhicule.

7. Procédé selon l'une des revendications précédentes, dans lequel ledit réseau de communication (L230, L240) comprend un bus CAN.

8. Procédé selon l'une quelconque des revendications précédentes, dans lequel ladite fonction de freinage du véhicule est l'un d'un groupe comprenant un avertissement de franchissement de ligne, une gestion de verrouillage différentiel, un contrôle de freinage et une gestion de compensation d'incident.

9. Procédé selon l'une quelconque des revendications précédentes, comprenant l'étape suivante :
- l'établissement en continu (s410) de ladite mesure d'instabilité, basée sur au moins une combinaison des paramètres parmi la vitesse du véhicule, l'accélération latérale du véhicule, la vitesse de lacet, l'angle de braquage, le taux de braquage et le patinage de roue dans au moins l'une des roues du véhicule (260a-260d).

10. Procédé selon l'une quelconque des revendications précédentes, comprenant l'étape suivante :
- la fourniture en continu (s420) de ladite mesure d'instabilité à un dispositif de commande centrale (230), également nommé contrôleur, via ledit réseau de communication interne au véhicule (L230, L240).

11. Dispositif pour l'amélioration de la sécurité lors de la conduite d'un véhicule (100) comprenant :
- des éléments (200 ; 210) adaptés pour l'établissement en continu d'une mesure de l'instabilité liée au véhicule (100), où ladite mesure de l'instabilité est une mesure de l'instabilité du véhicule,
- des éléments (200 ; 210) adaptés pour fournir continuellement ladite mesure de l'instabilité au sein d'un réseau de communication interne au véhicule (L230, L240) auquel au moins un dispositif de commande de la fonction de freinage du véhicule (240a ; 240b ; 240c ; 240d) est connecté, et
- des éléments (200 ; 210 ; 500) adaptés pour l'établissement en continu de ladite mesure de l'instabilité basée sur une différence entre une propulsion attendue et une propulsion réelle **caractérisée en ce que** lesdits éléments (200 ; 210 ; 500) sont adaptés pour l'établissement en continu de ladite propulsion attendue en effectuant une simulation basée sur la vitesse de lacet (Vitessedelacet) et l'accélération latérale (Alat).

12. Dispositif selon la revendication 11, comprenant :
- des éléments (200 ; 210 ; 500) adaptés pour l'établissement en continu de ladite propulsion réelle en effectuant un calcul basé sur la vitesse du véhicule (V) et le taux de braquage (Taux de braquage).

13. Dispositif selon l'une quelconque des revendications 11 à 12, dans lequel ledit dispositif de commande (240a ; 240b ; 240c ; 240d) est adapté, si besoin, pour l'évaluation si ladite fonction de freinage du véhicule doit être utilisée ou ne doit pas être utilisée en fonction de ladite mesure de l'instabilité fournie.

14. Dispositif selon l'une quelconque des revendications 11 à 13, dans lequel ledit dispositif de commande (240a ; 240b ; 240c ; 240d) est adapté pour l'ajustement de l'utilisation de ladite fonction de freinage du véhicule au besoin, ainsi que pour ladite mesure d'instabilité.

15. Dispositif selon l'une quelconque des revendications 11 à 14, comprenant :
- des éléments (240a ; 240b ; 240c ; 240d) adaptés, sur base de ladite mesure de l'instabilité, pour donner la priorité à l'utilisation d'au moins une fonction de freinage du véhicule d'un nombre de fonctions de freinage de véhicule disponibles et/ou pour le changement de la distribution d'action de freinage entre différentes fonctions de freinage du véhicule.

16. Dispositif selon l'une quelconque des revendications 11 à 15, dans lequel ladite fonction de freinage du véhicule comprend le freinage d'au moins une roue du véhicule et/ou le freinage d'un ralentisseur dans le véhicule.

17. Dispositif selon l'une quelconque des revendications 11 à 16, dans lequel ledit réseau de communication (L230, L240) comprend un bus CAN.

18. Dispositif selon l'une quelconque des revendications 11 à 17, dans lequel ladite fonction de freinage du véhicule est un d'un groupe comprenant un avertissement de franchissement de ligne, une gestion de verrouillage différentiel, un frein de direction et une gestion de compensation d'incident.

19. Dispositif selon l'une quelconque des revendications 11 à 18, comprenant :
- des éléments (200 ; 210) adaptés pour l'établissement en continu de ladite mesure de l'instabilité, basée sur au moins un ou une combinaison parmi les paramètres de la vitesse du véhicule, l'accélération latérale du véhicule, la vitesse de lacet, l'angle de braquage, le taux de braquage et le patinage de roue dans au moins l'une des roues du véhicule (260a- 260d).

20. Dispositif selon l'une quelconque des revendications 11 à 19, comprenant :
- des éléments (200 ; 210) adaptés pour fournir continuellement ladite mesure d'instabilité à un dispositif de contrôle central (230), également nommé contrôleur, via ledit réseau de communication interne au véhicule.

21. Véhicule (100 ; 110), comprenant un dispositif selon l'une quelconque des revendications 11 à 20.

22. Véhicule à moteur (100 ; 110) selon la revendication 21, dans lequel le véhicule est un camion, un bus ou une voiture.

23. Programme informatique (P) pour l'amélioration de la sécurité lors de la conduite d'un véhicule (100), dans lequel ledit programme informatique (P) comprend un code de programme pour amener un dispositif de commande électronique (200 ; 240a-240c ; 500), ou un autre ordinateur (210 ; 230 ; 240a-240d ; 500) connecté au dispositif de commande électronique (200 ; 240a- 240d ; 500) à exécuter les étapes selon l'une quelconque des revendications 1 à 10.

24. Produit de programme informatique, comprenant un code de programme stocké sur un support lisible par ordinateur, afin de réaliser les étapes selon l'une quelconque des revendications 1 à 10, lorsque ledit programme informatique est exécuté sur un dispositif de commande électronique (200 ; 240a-240d ; 500) ou sur un autre ordinateur (210 ; 240a-240d ; 500) connecté au dispositif de commande électronique (200 ; 240a-240d ; 500).
